# EUROPÄISCHE PATENTANMELDUNG

(11) **EP 4 600 093 A1**
(43) Veröffentlichungstag der Anmeldung: **13.08.2025**
(21) Anmeldenummer: 25154242.9
(22) Anmeldetag: 27.01.2025
(51) Int. Cl.: B60R 16/02, H02G 7/00, H01R 3/00, H02G 3/32

(54) **KABELSTRANGHALTERUNG MIT TOLERANZAUSGLEICH**

(30) Priorität: 09.02.2024 DE 102024103689
(71) Anmelder: MAN Truck & Bus SE, 80995 München (DE)
(72) Erfinder: Kittel, Ralf, 80995 München (DE); Jochum, Christina, 80995 München (DE)

(57) **Zusammenfassung**

Die Erfindung betrifft ein System (10) zur Halterung eines Kabelstrangs (1) für ein Kraftfahrzeug. Das System umfasst eine Kabelführung (12), die an dem Kabelstrang (1) befestigbar ist und eine Anschlusseinrichtung (14), die eine Anschlussstelle (15) zum elektrischen Anschlie-ßen des Kabelstrangs (1) aufweist. Die Kabelführung (12) weist ein erstes Befestigungselement (16a) und die Anschlusseinrichtung (14) ein zweites Befestigungselement (16b) auf, wobei das erste und zweite Befestigungselement (16a, 16b) ausgebildet sind, miteinander zusammenzuwirken, um die Kabelführung (12) und die Anschlusseinrichtung (14) aneinander zu befestigen, derart, dass ein Abstand (A) zwischen der Anschlussstelle (15) und der Kabelführung (12) einstellbar ist.

## Beschreibung

Die Erfindung betrifft ein System zur Halterung eines Kabelstrangs, ein Kraftfahrzeug mit einem solchen System sowie ein Verfahren zur Halterung eines Kabelstrangs unter Verwendung eines entsprechenden Systems.

Es ist bekannt, elektrische Komponenten eines Kraftfahrzeugs mittels vorkonfektionierter Kabelstränge bzw. Kabelbäume miteinander zu verbinden. Hierbei werden die Kabelstränge abgelängt zur Verfügung gestellt und deren Anschlussenden dann mit den entsprechenden Fahrzeugkomponenten kontaktiert. In der Regel weisen die Kabelstränge dabei gewisse Fertigungstoleranzen auf, die es bei der Montage auszugleichen gilt. Die bislang bekannten Lösungen zur Halterung eines Kabelstrangs ermöglichen oftmals keinen oder nicht zufriedenstellenden Toleranzausgleich.

Aufgabe der Erfindung ist es, eine verbesserte Lösung zur Halterung eines Kabelstrangs bereitzustellen. Bevorzugt ist es eine Aufgabe der Erfindung, eine Lösung bereitzustellen, mittels derer ein zuverlässiges Haltern des Kabelstrangs unter Ausgleich möglicher Fertigungstoleranzen des Kabelstrangs ermöglicht wird.

Diese Aufgaben können mit den Merkmalen der unabhängigen Ansprüche gelöst werden. Vorteilhafte Ausführungsformen und Anwendungen der Erfindung sind Gegenstand der abhängigen Ansprüche und werden im Folgenden unter teilweiser Bezugnahme auf die Figuren näher erläutert.

Gemäß einem ersten unabhängigen Aspekt der vorliegenden Offenbarung wird ein System zur Halterung eines Kabelstrangs (z. B. mit einem am Kabelstrang befestigten Steckverbinder) bereitgestellt. Bevorzugt ist das vorgenannte System ein System zur Halterung eines Kabelstrangs für ein Kraftfahrzeug. Beispielsweise kann das System in einem Kraftfahrzeug einsetzbar und/oder montierbar sein.

Das System weist eine (z. B. hülsen-, röhren und/oder hohlprofilförmige) Kabelführung (z. B. aus Kunststoff) auf, wobei die Kabelführung (z. B. klemmend) an dem Kabelstrang befestigbar ist. Beispielsweise kann die Kabelführung als eine Kabelschelle ausgebildet sein und/oder zwei lösbar aneinander fixierbare Halbschalen umfassen, zwischen denen der Kabelstrang (z. B. klemmend) aufnehmbar ist. Zudem oder alternativ kann die Kabelführung auch mittels Klebeband an dem Kabelstrang befestigbar sein.

Ferner weist das System eine (z. B. aus Kunststoff gefertigte) Anschlusseinrichtung (z. B. eine Fahrerhaustrennstelle für ein Kraftfahrzeug) auf. Die Anschlusseinrichtung weist eine Anschlussstelle (z. B. eine Steckverbinderaufnahme) zum (z. B. elektrischen) Anschließen des Kabelstrangs auf. Beispielsweise kann ein an einem Ende des Kabelstrangs befestigter Steckverbinder in die Anschlussstelle einsteckbar sein.

Weiterhin ist vorgesehen, dass die Kabelführung ein erstes Befestigungselement (z. B. ein erstes Rastelement) und die Anschlusseinrichtung ein zweites Befestigungselement (z. B. ein zweites Rastelement) aufweist. Lediglich beispielhaft kann das erste Befestigungselement dabei integral-einstückig mit der Kabelführung verbunden sein und/oder das zweite Befestigungselement integral-einstückig mit der Anschlusseinrichtung verbunden sein.

Das erste Befestigungselement und das zweite Befestigungselement sind ausgebildet, miteinander (z. B. rastend und/oder form- und/oder kraftschlüssig) zusammenzuwirken, um die Kabelführung und die Anschlusseinrichtung (z. B. lösbar) aneinander zu befestigen, vorzugsweise derart, dass ein Abstand zwischen der Anschlussstelle und der Kabelführung (z. B. zum Ausgleich von Fertigungstoleranzen, insbesondere Längentoleranzen, des Kabelstrangs) einstellbar ist. Bevorzugt ist der Abstand dabei entlang und/oder parallel einer Kabelstranglängsrichtung und/oder Axialrichtung des Kabelstrangs einstellbar.

Auf vorteilhafte Weise kann so eine sichere Fixierung des Kabelstrangs bereitgestellt werden, welche zusätzlich einen Toleranzausgleich erlaubt. Im Gegensatz zu den bisherigen Lösungen, z. B. einer Fixierung mittels Kabelbindern, ermöglicht die hier beschriebene Lösung ein einfaches und werkzeugloses Einstecken bzw. Einrasten der am Kabelstrang befestigten Kabelführung in die Anschlusseinrichtung, wodurch sich die Montagezeit bei der Fahrzeugherstellung reduzieren lässt und kein Montagewerkzeug (z. B. ein Schneidwerkzeug zum Kürzen des Kabelbinders) notwendig ist. Weitere Vorteile sind, dass eine Zugentlastung für den Kabelstrang ermöglicht wird und die Verbindung zwischen Kabelführung und Anschlusseinrichtung im Servicefall leicht zu lösen ist bzw. der Kabelstrang im Servicefall schnell und einfach demontiert werden kann.

Gemäß einem ersten Aspekt können das erste und zweite Befestigungselement als, vorzugsweise zueinander korrespondierende und/oder (z. B. formschlüssig) ineinandergreifbarer, Rastelemente ausgebildet sein, mittels derer die Kabelführung und die Anschlusseinrichtung unter Ausbildung einer (z. B. lösbaren) Rastverbindung (z. B. werkzeuglos) aneinander befestigbar (z. B. einclipsbar) sind. Auf vorteilhafte Weise kann dadurch ein schnelles und sicheres Verbinden und Lösen der Anschlusseinrichtung und Kabelführung ermöglicht werden.

Zudem oder alternativ ist jedoch auch denkbar, dass das erste und zweite Befestigungselement als Spann-, Klemm- und/oder Steckelemente ausgebildet sein können, mittels derer die Anschlusseinrichtung und die Kabelführung bevorzugt unter Ausbildung einer Spann-, Klemm+- und/oder Steckverbindung aneinander befestigbar sind.

Nach einem weiteren Aspekt können das erste und zweite Befestigungselement entlang einer Fügerichtung (z. B. Steckrichtung) miteinander verbindbar (z. B. ineinandersteckbar) sein. Die Fügerichtung kann bspw. diejenige Richtung kennzeichnen, entlang derer eine Fügebewegung erfolgt, über die das erste und zweite Befestigungselement miteinander verbunden werden. Dabei kann der Abstand zwischen der Anschlussstelle und Kabelführung quer (z. B. senkrecht) zur Fügerichtung und/oder parallel zur Kabelstranglängsrichtung einstellbar sein. Bevorzugt unterscheidet sich somit die Richtung, entlang derer der Abstand zwischen der Anschlussstelle und der Kabelführung einstellbar ist, von der Fügerichtung. Beispielsweise kann sich die Richtung, entlang derer der Abstand zwischen der Anschlussstelle der Kabelführung einstellbar ist, entlang bzw. parallel zur Kabelstranglängsrichtung erstrecken, während die Fügerichtung bspw. quer, insbesondere senkrecht, zur Kabelstranglängsrichtung verläuft. Auf vorteilhafte Weise kann durch eine einfache Handhabung sichergestellt werden.

Gemäß einem weiteren Aspekt können das erste und zweite Befestigungselement miteinander in mehreren (z. B. kontinuierlich einstellbaren) Einstellpositionen verbindbar sein. Hierbei kann sich für jede der mehreren Einstellpositionen der Abstand zwischen der Anschlussstelle und der Kabelführung unterscheiden. Lediglich beispielhaft können die mehreren Einstellpositionen mehrere Raststellungen sein bzw. mehreren Raststellungen entsprechen. Bevorzugt sind das erste und zweite Befestigungselement allerdings kontinuierlich zwischen den mehreren Einstellpositionen bewegbar (z. B. verschiebbar). Auf vorteilhafte Weise kann dadurch eine ausreichende Einstellbarkeit der Verbindung sichergestellt werden bzw. je nachdem wie die Toleranzen des Kabelstrangs ausfallen, eine "passende" Einstellposition bereitgestellt werden.

Nach einem weiteren Aspekt können das erste und zweite Befestigungselement in einem miteinander verbunden Zustand relativ zueinander (z. B. entlang einer Geraden) bewegbar (z. B. verschiebbar) sein, bevorzugt, um dadurch den Abstand zwischen der Anschlussstelle und der Kabelführung einzustellen. Beispielsweise können das erste und zweite Befestigungselement (z. B. nach Überwindung einer Haltekraft) gegeneinander bewegbar (z. B. verschiebbar) sein, während das erste und zweite Befestigungselement zumindest abschnittsweise formschlüssig miteinander verbunden sind. Vorzugsweise sind das erste und zweite Befestigungselement entlang der Kabelstranglängsrichtung und/oder Axialrichtung des Kabelstrangs bewegbar (z. B. verschiebbar). Auf vorteilhafte Weise kann dadurch eine einfache und zuverlässige Einstellbarkeit des Abstands zwischen Anschlussstelle und Kabelführung ermöglicht werden.

Zudem oder alternativ kann das erste oder zweite Befestigungselement einen (z. B. geraden) Führungsabschnitt aufweisen, entlang derer das zweite oder erste Befestigungselement (z. B. in einem miteinander verbunden Zustand) geführt bewegbar (z. B. verschiebbar) sind, um den Abstand zwischen der Anschlussstelle und der Kabelführung einzustellen. Der Führungsabschnitt kann hierbei ein durchgängiger Führungsabschnitt sein. Es ist allerdings auch möglich, dass der Führungsabschnitt durchbrochen ist und/oder mehrere voneinander getrennte Führungsbereiche aufweist. Bevorzugt erstreckt sich der Führungsabschnitt entlang der Kabelstranglängsrichtung und/oder Axialrichtung des Kabelstrangs. Auf vorteilhafte Weise kann auch dadurch eine einfache und zuverlässige Einstellbarkeit des Abstands zwischen Anschlussstelle und Kabelführung ermöglicht werden.

Gemäß einem weiteren Aspekt kann das erste Befestigungselement integral-einstückig mit der Kabelführung verbunden sein. Bevorzugt sollen das erste Befestigungselement und die Kabelführung somit nicht zerstörungsfrei voneinander lösbar sein.

Zudem oder alternativ kann das erste Befestigungselement von der Kabelführung (z. B. zungenartig) abstehen und/oder abragen. Beispielsweise kann das erste Befestigungselement ein erstes Ende aufweisen, das mit der Kabelführung verbunden ist, und ein, vorzugsweise zum ersten Ende entgegengesetztes, zweites freies Ende aufweisen.

Zudem oder alternativ kann das erste Befestigungselement federnd ausgebildet sein. Beispielsweise kann das erste Befestigungselement durch eine quer zur Fügerichtung gerichtete Krafteinwirkung aus einer Ruhelage auslenkbar sein und ausgebildet sein, bei einem Wegfall der Krafteinwirkung in die Ruhelage zurückzufedern, vorzugsweise, um dadurch das zweite Befestigungselement zu hintergreifen.

Zudem oder alternativ kann das erste Befestigungselement einen Rastvorsprung (z. B. einen Rasthaken und/oder Rastnase) aufweisen. Beispielsweise kann der Rastvorsprung an dem zweiten freien Ende des ersten Befestigungselements angeordnet sein.

Nach einem weiteren Aspekt kann das zweite Befestigungselement mehrere (z. B. kammförmig angeordnete und/oder gleichmäßig voneinander beabstandete) Zapfen aufweisen. Die mehreren Zapfen können jeweils bspw. stangenförmig und/oder stiftförmig ausgebildet sein.

Bevorzugt weisen die mehreren Zapfen jeweils (z. B. an einer jeweiligen Stirnseite der Zapfen) eine Anlagefläche für das erste Befestigungselement auf. Beispielsweise können somit mehrere voneinander beanstandete und/oder entlang einer Geraden angeordnete Anlageflächen für das zweite Befestigungselement bereitgestellt werden. Wie im Folgenden noch eingehender beschrieben wird, ermöglicht die unterteilte Ausbildung des ersten Befestigungselements auf vorteilhafte Weise ein Einführen eines Schraubenziehers (z. B. zwischen zwei Zapfen), um dadurch die Verbindung zwischen dem ersten und zweiten Befestigungselement in jeder Einstellpositionen auf einfache Weise zu lösen.

Zudem oder alternativ können die mehreren Zapfen bevorzugt von dem ersten Befestigungselement hintergreifbar sein. Beispielsweise kann in einem Zustand, in dem die Anschlusseinrichtung und die Kabelführung aneinander befestigt bzw. das erste und zweite Befestigungselement miteinander verbunden sind (im Folgenden auch als aneinander befestigter Zustand bezeichnet), der Rastvorsprung des ersten Befestigungselements an zumindest einem Teil der mehreren Anlageflächen anliegen.

Zudem oder alternativ können die mehreren Zapfen bevorzugt parallel zueinander und/oder gleichmäßig voneinander beabstandet angeordnet sein. Vorzugsweise ist dabei eine jeweilige Längsachse jedes Zapfens parallel zur Fügerichtung orientiert.

Zudem oder alternativ können die mehreren Zapfen bevorzugt angeordnet und/oder ausgebildet sein, dass in einem bzw. dem Zustand, in dem die Anschlusseinrichtung und die Kabelführung aneinander zu befestigt sind, nur ein Teil der mehreren Zapfen mit dem ersten Befestigungselement in (z. B. direkten) Kontakt steht. Vorzugsweise weist im aneinander befestigten Zustand zumindest ein Teil der mehreren Zapfen keinen (z. B. direkten) Kontakt zum ersten Befestigungselement auf.

Gemäß einem weiteren Aspekt kann die Anschlusseinrichtung eine (z. B. durchgängige) Trennwand aufweisen, die ein Inneres der Anschlusseinrichtung in zwei (z. B. voneinander durch die Trennwand getrennte) Bereiche unterteilt. Die Trennwand kann hierbei eine, die zwei Bereiche miteinander verbindende Durchgangsöffnung aufweisen, in der die Anschlussstelle zumindest abschnittsweise angeordnet und/oder ausgebildet ist. Insbesondere im Fall, dass die Anschlusseinrichtung als Fahrerhaustrennstelle ausgebildet ist, kann dadurch auf vorteilhafte Weise eine sichere Trennung zwischen fahrzeuginneren und fahrzeugäußeren Komponenten erreicht werden.

Zudem oder alternativ kann die Anschlussstelle der Anschlusseinrichtung eine Steckverbinderaufnahme (z. B. eine Steckverbinderbuchse) aufweisen, in die ein am Kabelstrang befestigter Steckverbinder (z. B. lösbar) einsteckbar ist. Beispielsweise kann die Anschlussstelle eine zu dem Steckverbinder korrespondierende Form und/oder Größe aufweisen. Bevorzugt ist hierbei vorgesehen, dass die Anschlussstelle ferner zum (z. B. fluchtenden) Anschließen eines, zu dem Steckverbinder korrespondierenden Gegensteckverbinders ausgebildet ist, derart, dass der Steckverbinder und der Gegensteckverbinder im Bereich der Anschlussstelle (z. B. lösbar) elektrisch und/oder mechanisch miteinander verbindbar sind. Beispielsweise kann der Steckverbinder von einem Fahrzeugaußenraum aus in die Anschlussstelle einsteckbar sein, während der Gegensteckverbinder von einem Fahrzeuginnenraum aus in die Anschlussstelle einsteckbar sein kann. Auf vorteilhafte Weise kann dadurch eine einfache und sichere Verbindung/Trennung zwischen inneren elektronischen Fahrzeugkomponenten und äußeren elektronischen Fahrzeugkomponenten bereitgestellt werden.

Nach einem weiteren Aspekt kann die Anschlusseinrichtung einen Gehäuseabschnitt aufweisen. Bevorzugt dient der Gehäuseabschnitt zur zumindest abschnittsweisen Aufnahme eines Endes des Kabelstrangs und/oder als Berührschutz für die Anschlussstelle.

Gemäß einem weiteren Aspekt kann das erste Befestigungselement an dem Gehäuseabschnitt (z. B. an einem wannenförmigen, hülsenförmigen und/oder röhrenförmigen Fortsatz des Gehäuseabschnitts) angeordnet sein. Beispielsweise können das erste Befestigungselement und der Gehäuseabschnitt integral-einstückig miteinander verbunden sein.

Zudem oder alternativ kann das zweite Befestigungselement in einer (z. B. beidseitig mit einem Außenraum in Verbindung stehenden) Gehäuseabschnittsdurchgangsöffnung des Gehäuseabschnitts angeordnet sein. Auf vorteilhafte Weise kann dadurch eine gute Erreichbarkeit des zweiten Befestigungselements sichergestellt werden, bspw., um zum Lösen der Verbindung ein Hebelwerkzeug (wie bspw. einen Schraubenzieher) zur Verbindungsstelle zu führen.

Zudem oder alternativ kann der Gehäuseabschnitt mindestens ein Gehäuseabschnittsdurchgangsloch zur Aufnahme eines Befestigungsmittels zum Befestigen der Anschlusseinrichtung am Kraftfahrzeug aufweisen. Lediglich beispielhaft kann in dem mindestens einen Gehäuseabschnittsdurchgangsloch eine Schraube, ein Bolzen und/oder Gewindestift aufnehmbar sein.

Zudem oder alternativ kann der Gehäuseabschnitt einen abnehmbaren Deckel umfassen. Entsprechend kann der Gehäuseabschnitt bevorzugt mehrteilig ausgebildet sein. Mittels des abnehmbaren Deckels kann auf vorteilhafte Weise eine gute Zugänglichkeit und sicherer Schutz der Anschlussstelle sichergestellt werden.

Nach einem weiteren Aspekt kann das System ferner eine Dichteinrichtung aufweisen. Die Dichteinrichtung kann dabei eine, an der Kabelführung angeordnete (z. B. geschlossene) Ringwulst und einen, an der eine Anschlusseinrichtung angeordneten (z. B. elastischen) Dichtabschnitt aufweisen, wobei in einem (bzw. dem) Zustand, in dem die Anschlusseinrichtung und die Kabelführung aneinander befestigt sind, die Ringwulst in den Dichtabschnitt drückt. Auf vorteilhafte Weise kann dadurch eine möglichst wasserdichte Verbindung zwischen Anschlusseinrichtung und Kabelführung bereitgestellt werden.

Gemäß einem weiteren Aspekt kann die Kabelführung eine Kabelschelle (z. B. eine Kabelklemmschelle) sein und/oder aufweisen. Bevorzugt umgibt die Kabelführung und/oder Kabelschelle in einem an dem Kabelstrang befestigten Zustand den Kabelstrang (z. B. umfangsseitig) vollständig. Auf vorteilhafte Weise kann dadurch eine einfache und sichere Anbringung der Kabelführung am Kabelstrang sichergestellt werden.

Zudem oder alternativ kann die Kabelführung ein erstes Kabelführungsteil (z. B. eine erste Kabelführungsschale) und ein zweites Kabelführungsteil (z. B. eine zweite Kabelführungsschale) aufweisen. Hierbei kann der Kabelstrang zwischen dem ersten und zweiten Kabelführungsteil einklemmbar sein, um so die Kabelführung am Kabelstrang zu befestigen. Bevorzugt weist die Kabelführung zumindest eine (z. B. lösbare) Kabelführungs-Rastverbindung auf, mittels derer das erste und zweite Kabelführungsteil (z. B. lösbar) miteinander verbindbar sind. Auf vorteilhafte Weise kann dadurch eine lösbare Anbringung der Kabelführung am Kabelstrang bereitgestellt werden.

Nach einem weiteren Aspekt kann die Kabelführung ein Kabelführungsdurchgangsloch aufweisen, in das der Kabelstrang (z. B. zumindest abschnittsweise) aufnehmbar ist, vorzugsweise derart, dass die Kabelführung den Kabelstrang (z. B. im aufgenommenen Zustand) umfangsseitig umgibt. Entsprechend kann die Kabelführung insgesamt hülsen- und/oder röhrenförmig ausgebildet sein. Auf vorteilhafte Weise kann dadurch eine sichere Fixierung der Kabelführung und des Kabelstrang sichergestellt werden.

Zudem oder alternativ kann die Kabelführung zur Aufnahme von zumindest zwei Kabelsträngen ausgebildet sein. Beispielsweise kann die Kabelführung als Doppelkabelschelle ausgebildet sein und/oder eine Doppelkabelschelle aufweisen. Zudem oder alternativ kann die Kabelführung zumindest zwei (z. B. parallele), vorzugsweise durch mindestens einen Trennsteg zumindest abschnittsweise voneinander getrennte, Führungskanäle aufweisen, in welchen jeweils einer der zumindest zwei Kabelstränge aufnehmbar ist. Auf vorteilhafte Weise sind dadurch mehrere Kabelstränge mittels nur einer Kabelführung an der Anschlusseinrichtung befestigbar.

Die vorstehend aus Gründen der Lesbarkeit jeweils exemplarisch für das erste bzw. zweite Befestigungselement beschriebenen Ausführungen sind nicht auf diese Auslegung beschränkt. Anstelle der Ausführung des zweiten Befestigungselements als Aufnahme, in die das erste Befestigungselement eingesteckt wird, soll auch die umgekehrte Ausführung, bei der das erste Befestigungselement als Aufnahme ausgebildet ist, in die das zweite Befestigungselement eingesteckt wird, offenbart und beanspruchbar sein. Entsprechend sollen die hierin für das erste Befestigungselement beschriebenen Merkmale auch für das zweite Befestigungselement offenbart und beanspruchbar sein. Selbiges soll auch umgekehrt gelten. Im Zusammenhang mit der vertauschten Ausführung des ersten und zweiten Befestigungselements ist dabei mitunter der Ausdruck "Kabelführung" durch "Anschlusseinrichtung" bzw. "Gehäuseabschnitt" zu ersetzen und umgekehrt.

Weiterhin kann nach einem weiteren Aspekt das System auch den Kabelstrang mitumfassen, wobei bevorzugt dann die Kabelführung an dem Kabelstrang befestigt ist.

In einer bevorzugten Ausführungsform weist die Kabelführung ferner mehrere (z. B. zwei), vorzugsweise voneinander beabstandete, erste Befestigungselemente und/oder die Anschlusseinrichtung mehrere (z. B. zwei), vorzugsweise voneinander beabstandete, zweite Befestigungselemente auf. Die mehreren ersten Befestigungselemente können dabei jeweils wie hierin im Zusammenhang mit dem ersten Befestigungselement beschrieben und insbesondere gleich ausgebildet sein. Zudem oder alternativ können auch die mehreren zweiten Befestigungselemente jeweils wie hierin im Zusammenhang mit dem zweiten Befestigungselement beschrieben und insbesondere gleich ausgebildet sein. Bevorzugt sind die mehreren ersten und zweiten Befestigungselemente jeweils ausgebildet, paarweise miteinander zusammenzuwirken.

Ferner sei erwähnt, dass das System ebenso zur Halterung eines (z. B. Einzel-)Kabels und/oder elektrischen Leiters geeignet ist bzw. verwendet werden kann und entsprechend der Ausdruck "Kabelstrang" durch "Kabel" bzw. "elektrischen Leiter" ersetzbar ist, ohne den Bereich der Erfindung zu verlassen.

Nach einem weiteren unabhängigen Aspekt der vorliegenden Offenbarung wird ein Kraftfahrzeug bereitgestellt. Das Kraftfahrzeug weist ein System, wie hierin beschrieben, auf. Folglich sollen die im Zusammenhang mit dem System beschriebenen Aspekte auch im Zusammenhang mit dem Kraftfahrzeug offenbart und beanspruchbar sein. Entsprechendes soll auch umgekehrt gelten. Bevorzugt ist das Kraftfahrzeug ein Nutzfahrzeug. Unter einem Nutzfahrzeug kann dabei im Allgemeinen bspw. ein Fahrzeug verstanden werden, das durch seine Bauart und Einrichtung speziell zur Beförderung von Personen, zum Transport von Gütern oder zum Ziehen von Anhängerfahrzeugen ausgelegt ist. Beispielsweise kann das Nutzfahrzeug ein Lastkraftwagen, ein Sattelschlepper, ein Baustellenfahrzeug und/oder ein Omnibus sein.

Gemäß einem Aspekt kann das Kraftfahrzeug ein Fahrerhaus aufweisen. Bevorzugt weist das Fahrerhaus hierbei neben Instrumenten zur Fahrzeugführung auch Einrichtungen auf, die der Fahrer des Kraftfahrzeugs während seiner Ruhezeiten nutzen kann, zum Beispiel eine Ruheliege. Weiterhin kann die Anschlusseinrichtung als Fahrerhaustrennstelle ausgebildet sein, welche an dem Fahrerhauses (z. B. in einem Frontbereich des Fahrerhauses) angeordnet sein kann. Bevorzugt ermöglicht die Fahrerhaustrennstelle ein (z. B. trennbares) elektrisches Anbinden einer (z. B. von einem Sonderfahrzeughersteller bereitgestellten) Aufbaukomponente an die Fahrzeugelektronik und/oder Fahrerhauselektronik. Beispielsweise kann das Kraftfahrzeug einen Kabelstrang aufweisen, an dem die Kabelführung befestigt ist, wobei ein (z. B. erstes) Ende des Kabelstrangs in der Fahrerhaustrennstelle aufgenommen ist und bspw. dort mit einer innerhalb des Fahrerhauses angeordneten elektrischen Komponente elektrisch verbunden ist. Ein weiteres (z. B. zweites) Ende des Kabelstrangs kann bevorzugt mit zumindest einer außerhalb des Fahrerhauses angeordneten weiteren elektrischen Komponente (z. B. einer Aufbaukomponente) verbunden sein. Auf vorteilhafte Weise kann dadurch eine leicht zugängliche Schnittstelle zwischen im Fahrerhaus angeordneten, inneren elektrischen Komponenten und den äußeren Aufbaukomponenten bereitgestellt werden, die ein schnelles Verbinden und Trennen der entsprechenden Komponenten ermöglicht.

Nach einem weiteren unabhängigen Aspekt der vorliegenden Offenbarung wird ein Verfahren zur Halterung eines Kabelstrangs mittels eines Systems und/oder mittels eines Kraftfahrzeugs, wie hierin beschrieben, bereitgestellt. Folglich sollen wiederum die im Zusammenhang mit dem System und Kraftfahrzeug beschriebenen Aspekte auch im Zusammenhang mit dem Verfahren offenbart und beanspruchbar sein. Entsprechendes soll auch umgekehrt gelten.

Das Verfahren weist ein Befestigen der Kabelführung an dem Kabelstrang auf. Beispielsweise kann die Kabelführung klemmend an dem Kabelstrang befestigt werden, bspw. indem der Kabelstrang zwischen einem ersten und zweiten Kabelführungsteil der Kabelführung eingeklemmt wird.

Weiterhin weist das Verfahren ein Festlegen eines Abstands zwischen der Anschlussstelle und der Kabelführung auf. Bevorzugt kann das Festlegen in Abhängigkeit einer Fertigungstoleranz des Kabelstrangs erfolgten und/oder derart erfolgen, dass eine vorbestimmte Länge des Kabelstrangs in der Anschlusseinrichtung aufgenommen wird.

Ferner weist das Verfahren ein Aneinanderbefestigen der Anschlusseinrichtung und der Kabelführung in dem festgelegten Abstand durch Verbinden des ersten und zweiten Befestigungselements auf. Beispielsweise können das erste und zweite Befestigungselement in Abhängigkeit des festgelegten Abstands ineinander verrastet werden.

Die zuvor beschriebenen bevorzugten Ausführungsformen und Merkmale der Offenbarung sind beliebig miteinander kombinierbar. Weitere Einzelheiten und Vorteile werden im Folgenden unter Bezug auf die beigefügten Zeichnungen beschrieben. Es zeigen:
- Figuren 1A und 1B: verschiedene Ansichten eines Systems zur Halterung eines Kabelstrangs gemäß einer Ausführungsform in einem aneinander befestigten Zustand;
- Figuren 2A-2C: verschiedene Detailansichten des Systems im aneinander befestigten und in einem voneinander getrennten Zustand; und
- Figuren 3A-3C: mehrere Ansichten verschiedener Einstellpositionen des Systems.

Die in den Figuren gezeigten Ausführungsformen stimmen zumindest teilweise überein, sodass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

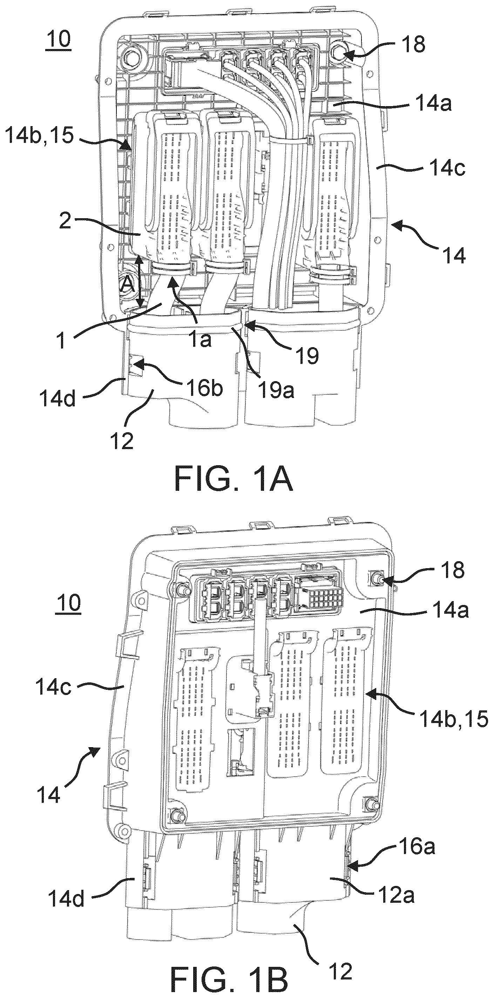

Figuren 1A bis 3C zeigen (zumindest ausschnittsweise) ein System 10 zur Halterung eines Kabelstrangs 1 für ein Kraftfahrzeug. Der Kabelstrang 1 kann dabei ein Bündel aus mehreren Einzelleitern aufweisen, welches bspw. von einem gemeinsam Mantel umgeben sein kann. Das Kraftfahrzeug kann bspw. ein Nutzfahrzeug (z. B. ein LKW oder Sattelschlepper) sein und/oder ein Fahrerhaus umfassen.

Das System 10 umfasst eine, am Kabelstrang 1 befestigbare, Kabelführung 12 mit einem ersten Befestigungselement 16a und eine Anschlusseinrichtung 14 mit einem zweiten Befestigungselement 16b.

Das erste und zweite Befestigungselement 16a, 16b sind bevorzugt entlang einer Fügerichtung F miteinander verbindbar und ausgebildet, miteinander zusammenzuwirken, um die Kabelführung 12 und die Anschlusseinrichtung 14 (z. B. lösbar) aneinander zu befestigen. Beispielsweise können das erste und zweite Befestigungselement 16a, 16b form- und/oder kraftschlüssig miteinander verbindbar sein. Dadurch können die Kabelführung 12 und die Anschlusseinrichtung 14 gegen ein unbeabsichtigtes Entfernen voneinander sicherbar sein. Vorzugsweise kann so eine sichere mechanische Halterung des Kabelstrangs 1 an der Anschlusseinrichtung 14 realisiert werden, wobei durch die, im Folgenden noch eigehender beschriebene, Ausführung der Befestigungselemente 16a und 16b bzw. der Kabelführung 12 und der Anschlusseinrichtung 14 zudem ein Ausgleich von Fertigungstoleranzen des Kabelstrangs 1 ermöglicht wird.

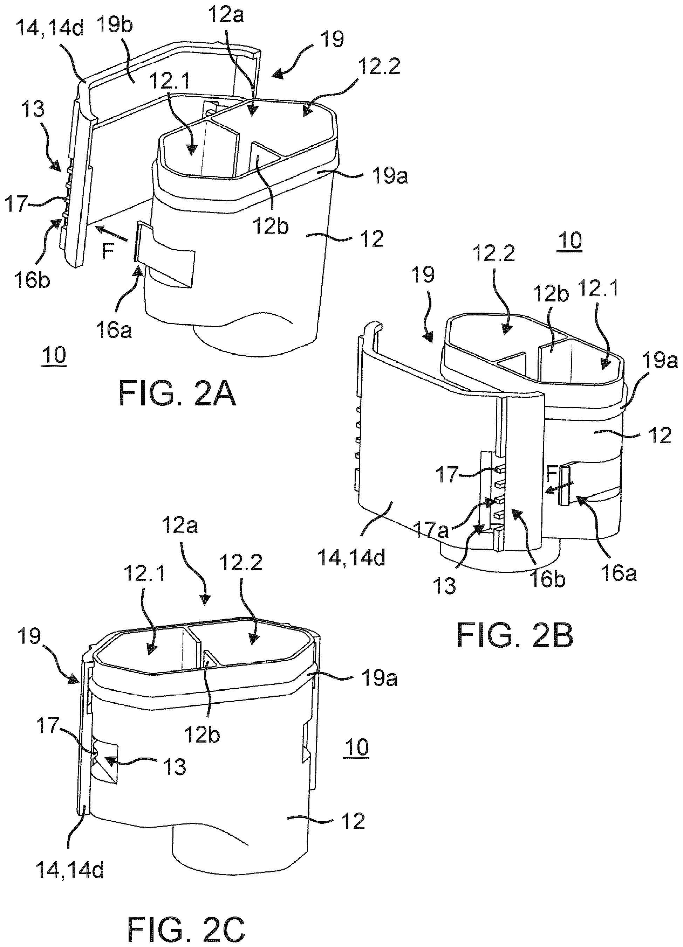

Die Kabelführung 12 kann als ein Hohlprofil ausgebildet sein (vgl. z. B. Figuren 2A-2C). Beispielsweise kann die Kabelführung 12 hülsenförmig und/oder röhrenförmig ausgebildet sein. Die Kabelführung 12 kann ein Kabelführungsdurchgangsloch 12a aufweisen, in das der Kabelstrang 1 aufnehmbar ist. Im aufgenommenen Zustand kann die Kabelführung 12 den Kabelstrang 1 (z. B. umfangsseitig) umgeben und/oder umschließen (vgl. Figur 1A). Zudem oder alternativ kann der Kabelstrang 1 die Kabelführung 12 im aufgenommenen Zustand vollständig durchdringen.

Die Kabelführung 12 kann als eine Kabelschelle ausgebildet sein. Bevorzugt ist die Kabelführung 12 als eine Kabelklemmschelle ausgebildet. Die Kabelführung 12 kann dabei ein erstes Kabelführungsteil und ein zweites Kabelführungsteil aufweisen (aus Gründen der Übersichtlichkeit nicht dargestellt). Das erste und zweite Kabelführungsteil können jeweils (halb-)schalenförmig ausgebildet sein und/oder zumindest abschnittsweise eine an den Kabelstrang 1 angepasste Form aufweisen. Der Kabelstrang 1 kann zwischen dem ersten und zweiten Kabelführungsteil einklemmbar sein, bspw. um so die Kabelführung 12 am Kabelstrang 1 zu befestigen.

Die Kabelführung 12 kann dabei eine oder mehrere Kabelführungs-Rastverbindungen (nicht dargestellt) aufweisen, mittels derer das erste und zweite Kabelführungsteil, vorzugsweise lösbar, miteinander rastend verbindbar sind. Lediglich beispielhaft kann das ersten Kabelführungsteil einen Rastarm mit Rastvorsprung und das zweite Kabelführungsteil eine korrespondierende Rastaufnahme aufweisen, wobei der Rastarm und die Rastaufnahme ausgebildet sind, miteinander zu verrasten. Grundsätzlich können die beiden Kabelführungsteile auch mittels anderer Mechanismen (z. B. Schnellspanner, Gewindebolzen, etc.) lösbar miteinander verbindbar sein. Weiterhin kann die Kabelführung 12 auch für eine andere kraft-, form- und/oder stoffschlüssige Befestigung am Kabelstrang 1 ausgebildet sein.

In einer bevorzugten Ausführungsform kann die Kabelführung 12 am Kabelstrang 1 bspw. mittels Klebeband befestigbar bzw. befestigt sein. Hierbei kann das Klebeband an der Kabelführung 12 angeklebt werden und dann über den Kabelstrang 1 gewickelt werden, sodass eine feste Verbindung zwischen Kabelführung 12 und Kabelstrang 1 entsteht.

Wie bspw. in Figur 1A dargestellt ist, kann die Kabelführung 12 in einer bevorzugten Ausführungsform zur Aufnahme von zumindest zwei Kabelsträngen 1 ausgebildet sein. Beispielsweise kann die Kabelführung 12 als Doppelkabelschelle ausgebildet sein. Entsprechend kann die Kabelführung 12 zumindest zwei parallele Führungskanäle 12.1 und 12.2 aufweisen, in welchen jeweils einer der zumindest zwei Kabelstränge 1 aufnehmbar ist. Die zumindest zwei parallelen Führungskanäle 12.1, 12.2 können bspw. über einen oder mehrere Trennstege 12b der Kabelführung 12 zumindest abschnittsweise voneinander getrennt sein (vgl. z. B. Figuren 2A-2C).

Wie vorstehend erwähnt, weist die Kabelführung 12 ferner das erste Befestigungselement 16a auf, welches ausgebildet ist, mit dem zweiten Befestigungselement 16b der Anschlusseinrichtung 14 zum Befestigen der Kabelführung 12 und der Anschlusseinrichtung 14 aneinander zusammenzuwirken. In der dargestellten Ausführung sind das erste und zweite Befestigungselement 16a, 16b beispielhaft als zueinander korrespondierende Rastelemente ausgebildet, mittels derer die Kabelführung 12 und die Anschlusseinrichtung 14 unter Ausbildung einer lösbaren Rastverbindung aneinander befestigbar sind.

Das erste Befestigungselement 16a kann dabei als ein, mit der Kabelführung 12 integral-einstückig verbundener, Rastarm ausgebildet sein (vgl. Figur 2A). Dieser bzw. das erste Befestigungselement 16a kann bspw. federnd ausgebildet sein und/oder von der Kabelführung 12 (z. B. zungenartig) abstehen bzw. abragen. Der Rastarm kann ein erstes Ende, das mit der Kabelführung 12 integral-einstückig verbunden ist, und ein, dem ersten Ende entgegengesetztes, freies zweites Ende aufweisen. An dem zweiten Ende kann ein Rastvorsprung, z. B. in Form einer Rastnase und/oder eines Rasthakens, angeordnet sein (vgl. z. B. Figuren 2A und 2B). Bevorzugt weist die Kabelführung 12 im Bereich des ersten Befestigungselements 16a eine Aussparung auf, bspw. um, wie im Folgenden noch eingehender beschrieben wird, auch im mit dem zweiten Befestigungselement 16b verbunden Zustand eine Erreichbarkeit des ersten Befestigungselements 16a bspw. mittels eines Schraubenziehers zu ermöglichen.

Die Anschlusseinrichtung 14 kann, wie vorliegend exemplarisch dargestellt ist, in Form einer Fahrerhaustrennstelle ausgebildet sein (vgl. Figuren 1A und 1B). Beispielsweise kann die Anschlusseinrichtung 14 bzw. Fahrerhaustrennstelle an dem Fahrerhaus des Kraftfahrzeugs (nicht dargestellt) angeordnet sein. Die Anschlusseinrichtung 14 kann eine Schnittstelle zur elektrischen Kopplung von außerhalb des Fahrerhauses angeordneten elektrischen Komponenten (z. B. Aufbaukomponenten) mit innerhalb des Fahrerhauses angeordneten elektrischen Komponenten sein. Die Anschlusseinrichtung 14 bzw. Fahrerhaustrennstelle kann dabei von außerhalb des Kraftfahrzeugs (z. B. nach Abnehmen einer entsprechenden Fahrzeugverkleidung) zugänglich sein.

Die Anschlusseinrichtung 14 weist eine Anschlussstelle 15 zum Anschließen des Kabelstrangs 1 auf (vgl. Figur 1A). Beispielsweise kann die Anschlussstelle 15 eine Steckverbinderaufnahme sein und/oder aufweisen. In die Steckverbinderaufnahme kann ein am Kabelstrang 1 befestigter (z. B. Mehrkontakt-)Steckverbinder 2 einsteckbar sein. Optional kann die Anschlusseinrichtung 14 auch weitere Anschlussstellen zum Anschließen weiterer Kabelstränge aufweisen.

Zum Schutz gegen äußere Umwelteinflüsse (z. B. Feuchtigkeit) und/oder als Berührschutz für die Anschlussstelle 15 kann die Anschlusseinrichtung 14 einen Gehäuseabschnitt 14c, z. B. aus Kunststoff, aufweisen (vgl. Figuren 1A und 1B). In dem Gehäuseabschnitt 14c kann ein Ende 1a des Kabelstrangs 1 und/oder der am Kabelstrang 1 befestigte Steckverbinder 2 aufnehmbar sein. Bevorzugt ist auch die Anschlussstelle 15 innerhalb des Gehäuseabschnitts 14c angeordnet.

Lediglich beispielhaft kann der Gehäuseabschnitt 14c einen rahmenförmigen Grundkörper aufweisen. Ferner kann der Gehäuseabschnitt 14c eine Trennwand 14a aufweisen, welche von dem Grundkörper umgeben wird und die Anschlusseinrichtung 12 in zwei Bereiche unterteilt, zum Beispiel in einen vorderen Bereich (Figur 1A) und einen hinteren Bereich (Figur 1B).

Bevorzugt weist die Trennwand 14a eine Durchgangsöffnung 14b auf, welche die zwei Bereiche miteinander verbindet und in der die Anschlussstelle 15 zumindest abschnittsweise angeordnet und/oder ausgebildet ist. Beispielsweise kann, falls der Steckverbinder 2 in der Anschlussstelle 15 eingesteckt ist, der Steckverbinder 2 bzw. das Ende des Kabelstrang 1 in dem vorderen Bereich angeordnet sein (vgl. Figur 1A).

Bevorzugt ist die Anschlussstelle 15 ferner auch zum Anschließen eines zum Steckverbinder 2 korrespondierenden Gegensteckverbinders (nicht dargestellt) ausgebildet. Dieser kann bspw. über einen weiteren Kabelstrang (nicht dargestellt) mit einer im Fahrerhaus des Kraftfahrzeugs angeordneten elektrischen Komponente verbunden sein. Der Gegensteckverbinder kann, falls dieser in der Anschlussstelle 15 eingesteckt ist, in dem hinteren Bereich (vgl. Figur 1B) angeordnet sein. Entsprechend können der der Steckverbinder 2 und der Gegensteckverbinder mittels der Anschlussstelle 15 bzw. im Bereich der Anschlussstelle 15 elektrisch und mechanisch miteinander verbindbar sein, vorzugsweise um dadurch zumindest eine außerhalb des Fahrerhauses angeordneten elektrischen Komponenten mit zumindest einer innerhalb des Fahrerhauses angeordneten elektrischen Komponenten miteinander elektrisch zu verbinden.

Der Gehäuseabschnitt 14c und/oder Trennwand 14a kann weiterehin die mindestens ein Gehäuseabschnittsdurchgangsloch 18 zur Aufnahme eines Befestigungsmittels (z. B. einer Schraube) zum Befestigen der Anschlusseinrichtung 12 am Kraftfahrzeug aufweisen (vgl. Figuren 1A und 1B). Der Gehäuseabschnitt 14c kann ferner einen Deckel (nicht dargestellt) umfassen. Der Deckel kann den vorderen Bereich zumindest abschnittsweise begrenzen. Der Deckel kann, bspw. zum Anschließen des Kabelstrangs 1 an die Anschlussstelle 15, abnehmbar und/oder lösbar sein.

Weiterhin kann Gehäuseabschnitt 14c eine Kabelstrangdurchführungsöffnung aufweisen. Bevorzugt dient die Kabelstrangdurchführungsöffnung dazu, den an der Anschlussstelle angeschlossenen Kabelstrang 1 aus dem Gehäuseabschnitt 14c zu führen. Entsprechend kann die Kabelstrangdurchführungsöffnung ein Inneres der Anschlusseinrichtung 14, insbesondere den vorderen Bereich, mit einem Außenraum der Anschlusseinrichtung 14 verbinden. Hierbei kann der Gehäuseabschnitt 14c einen hülsenförmigen und/oder röhrenförmigen Fortsatz 14d aufweisen, der die Kabelstrangdurchführungsöffnung zumindest abschnittsweise begrenzt und/oder in dem die Kabelstrangdurchführungsöffnung ausgebildet ist. Bevorzugt wird der Fortsatz 14d dabei abschnittsweise durch einen (z. B. halbschalenförmigen und/oder wannenförmigen) Abschnitt des Grundkörpers und einen (z. B. halbschalenförmigen und/oder wannenförmigen) Abschnitt des Deckels gebildet. Entsprechend kann der Fortsatz 14d mehrteilig ausgebildet sein und/oder ein Inneres des Fortsatz 14d durch Abnahme des Deckels zugänglich sein.

Wie vorstehend erwähnt, weist die Anschlusseinrichtung 14 das zweite Befestigungselement 16b auf, welches ausgebildet ist, mit dem ersten Befestigungselement 16a der Kabelführung 12 zum aneinander Befestigen der Kabelführung 12 und der Anschlusseinrichtung zusammenzuwirken. Das zweite Befestigungselement 16b kann hierbei bspw. an dem Gehäuseabschnitt 14c und/oder an dem Fortsatz 14d angeordnet und/oder ausgebildet sein. Bevorzugt ist das zweite Befestigungselement 16b dabei integral-einstückig mit dem Gehäuseabschnitt 14c und/oder dem Fortsatz 14d verbunden. Bevorzugt sollen das zweite Befestigungselement 16b und der Gehäuseabschnitt 14c bzw. das zweite Befestigungselement 16b und der Fortsatz 14d somit nicht zerstörungsfrei voneinander lösbar sein.

In der dargestellten Ausführung weist das zweite Befestigungselement 16b mehrere Zapfen 17 auf, die zumindest abschnittsweise in einer, beidseitig mit dem Außenraum in Verbindung stehenden, Gehäuseabschnittsdurchgangsöffnung 13 des Gehäuseabschnitts 14c angeordnet sind. Im aneinander befestigten Zustand kann diese Gehäuseabschnittsdurchgangsöffnung 13 fluchtend zu der Aussparung der Kabelführung 12 angeordnet sein (vgl. z. B. Figuren 2B und 2C).

Bevorzugt sind die mehreren Zapfen 17 kammförmig, parallel zueinander und/oder gleichmäßig voneinander beabstandet angeordnet. Eine Längsachse jedes der mehreren Zapfen 17 kann sich dabei entlang der Gehäuseabschnittsdurchgangsöffnung 13 und/oder entlang der Fügerichtung F erstrecken. Die mehreren Zapfen 17 können jeweils von dem ersten Befestigungselement 16a hintergreifbar sein. Beispielsweise können die mehreren Zapfen 17 jeweils an ihrer jeweiligen Stirnseite eine Anlagefläche 17a für das erste Befestigungselement 16a, insbesondere für den Rastvorsprung des ersten Befestigungselements 16a, aufweisen. Die mehreren Anlageflächen 17a können hierbei einen insgesamt abschnittsweise durchbrochenen Anlagebereich (aufweisend die mehreren Anlageflächen 17a) bilden.

Werden die Kabelführung 12 und die Anschlusseinrichtung 14 entlang der Fügerichtung F in Kontakt gebracht bzw. das erste und zweite Befestigungselement 16a, 16b entlang einer Fügerichtung F miteinander verbunden, kann der Rastarm durch zumindest manche der mehreren Zapfen 17 federnd aus seiner Ruhelage ausgelenkt werden und der Rastvorsprung entlang mancher der mehreren Zapfen 17 gleiten bis der Rastvorsprung schließlich hinter manche der mehreren Zapfen 17 einrastet bzw. der Rastarm in die Ruhelage zurückfedert.

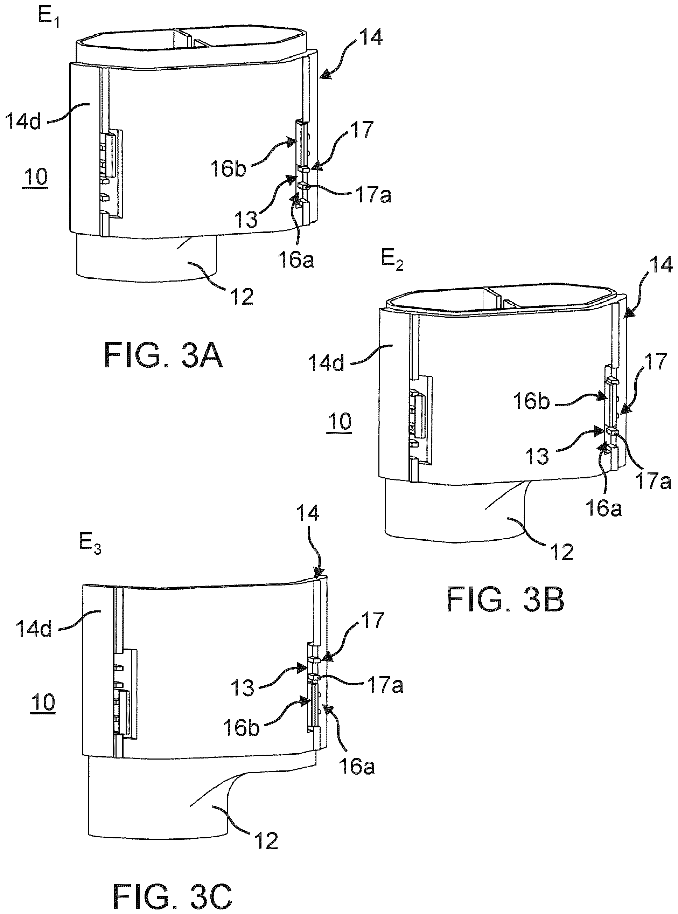

Wie bspw. aus den Figuren 2A, 2B und 3A-3C ersichtlich ist, weist das erste Befestigungselement 16a senkrecht zur Fügerichtung F bzw. entlang der Kabelstranglängsrichtung eine geringere Ausdehnung als das zweite Befestigungselement 16b auf. Beispielsweise kann das erste Befestigungselement 16a senkrecht zur Fügerichtung F bzw. entlang der Kabelstranglängsrichtung eine Ausdehnung aufweisen, die lediglich die Hälfte, vorzugsweise ein Drittel, besonders bevorzugt ein Viertel, der Ausdehnung des zweiten Befestigungselements 16b entspricht. Wie in den Figuren 3A-3C dargestellt ist, steht in dem Zustand, in dem die Kabelführung 12 und die Anschlusseinrichtung 14 aneinander befestigt sind, bevorzugt nur ein Teil der mehreren Zapfen 17 bzw. der Anlageflächen 17a mit dem ersten Befestigungselement 16a in Kontakt. Insgesamt können das erste und zweite Befestigungselement 16a, 16b somit ausgebildet sein, so zusammenzuwirken, dass ein Abstand A zwischen der Anschlussstelle 15 und der Kabelführung 12 einstellbar ist.

Entsprechend können das erste und zweite Befestigungselement 16a, 16b miteinander in mehreren Einstellpositionen E₁, E₂, E₃, bspw. in einer oberen Einstellposition E₁ (vgl. Figur 3A), in einer mittleren Einstellposition E₂ (Vgl. Figur 3B) und/oder in einer unteren Einstellposition E₃ (vgl. Figur 3C), verbindbar sein. Bevorzugt unterscheidet sich für jede der mehreren Einstellpositionen E₁, E₂, E₃ der Abstand A zwischen der Anschlussstelle 15 und der Kabelführung 12. Beispielsweise weist im Fall der, in den Figuren 3A-3C gezeigten Konfigurationen, die Einstellpositionen E₁ den geringsten Abstand A zwischen Anschlussstelle 15 und Kabelführung 12 auf, während die Einstellpositionen E₃ den größten Abstand A zwischen Anschlussstelle 15 und Kabelführung 12 aufweist.

Zum Einstellen des Abstands A zwischen Anschlussstelle 15 und Kabelführung 12 kann die Kabelführung 12 sogleich im jeweils gewünschten Abstand A in die Anschlusseinrichtung 14 eingesteckt werden bzw. das erste und zweite Befestigungselement 16a, 16b direkt im gewünschten Abstand A zwischen Anschlussstelle 15 und Kabelführung 12 miteinander verbunden bzw. aneinander gefügt werden. Es ist allerdings auch möglich, dass Anschlusseinrichtung 14 und Kabelführung 12 bzw. die beiden Befestigungselemente 16a, 16b zunächst zu verbinden und anschließend durch entsprechendes Verschieben (z. B. unter Zuhilfenahme eines Schraubenziehers als Hebel) den Abstand A zwischen Anschlussstelle 15 und Kabelführung 12 einzustellen. Beispielsweise können das erste und zweite Befestigungselement 16a, 16b in einem miteinander verbunden Zustand relativ zueinander (z. B. unter Zuhilfenahme eines Schraubenziehers als Hebel) entlang einer Geraden verschiebbar sein. Zudem oder alternativ kann das zweite Befestigungselement 16b einen geraden Führungsabschnitt aufweisen, der vorliegend bspw. durch die Seitenflächen der mehreren Zapfen 17 gebildet sein kann. Entlang dieses Führungsabschnitts kann das erste Befestigungselement 16a (z. B. nach Überwinden einer Haltekraft) geführt verschiebbar sein, um dadurch den Abstand A zwischen der Anschlussstelle 15 und der Kabelführung 12 einzustellen.

Um die Verbindung zwischen Kabelführung 12 und Anschlusseinrichtung 14 bzw. zwischen dem ersten und zweiten Befestigungselement 16a, 16b wieder zu lösen, kann bspw. ein Schraubenzieher entlang der Fügerichtung F in die Gehäuseabschnittsdurchgangsöffnung 13 des Gehäuseabschnitts 14c und zwischen zwei der mehreren Zapfen 17 eingeführt werden (vgl. Figur 2C). Durch Aufbringen einer senkrecht zur Fügerichtung gerichteten Kraft kann sodann der Rastarm von den Zapfen 17 weggebogen und die Kabelführung 12 zurückgezogen bzw. von der Anschlusseinrichtung 14 entfernt werden. Durch die mehrfachen Lücken zwischen den Zapfen 17 kann hierbei gewährleistet werden, dass der Schraubenzieher an mehreren Positionen den Rastarm erreicht bzw. in jeder der Einstellpositionen E₁, E₂, E₃ ein Lösen der Verbindung mittels des Schraubenziehers möglich ist. Insgesamt kann so eine einfache Montage und Demontage der Kabelführung 12 an der Anschlusseinrichtung 14 sichergestellt werden.

Um das Innere der Anschlusseinrichtung 14 bspw. gegen das Eindringen von Feuchtigkeit zu schützen, kann das System 10 ferner eine Dichteinrichtung 19 aufweisen (vgl. z. B. Figur 2A). Die Dichteinrichtung 19 kann hierbei eine, an der Kabelführung 12 angeordnete (z. B. geschlossene) Ringwulst 19a und einen, an der eine Anschlusseinrichtung 14 angeordneten (z. B. elastischen) Dichtabschnitt 19b aufweisen. In dem Zustand, in dem die Kabelführung 12 und die Anschlusseinrichtung 14 aneinander befestigt sind, kann die Ringwulst 19a in den Dichtabschnitt 19b drücken, um dadurch eine bspw. fluiddichte Abdichtung zwischen der Kabelführung 12 und der Anschlusseinrichtung 14 zu ermöglichen.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Kabelstrang
- 1a: Ende des Kabelstrangs
- 2: Steckverbinder
- 10: System zur Halterung eines Kabelstrangs
- 12: Kabelführung
- 12.1, 12.2: Führungskanal
- 12a: Kabelführungsdurchgangsloch
- 12b: Trennsteg
- 14: Anschlusseinrichtung
- 14a: Trennwand
- 14b: Durchgangsöffnung
- 14c: Gehäuseabschnitt
- 14d: Fortsatz
- 15: Anschlussstelle
- 16a: erstes Befestigungselement
- 16b: zweites Befestigungselement
- 17: Zapfen
- 18: Gehäuseabschnittsdurchgangsloch
- 19: Dichteinrichtung
- 19a: Ringwulst
- 19b: Dichtabschnitt
- A: Abstand
- E₁, E₂, E₃: Einstellpositionen
- F: Fügerichtung

## Patentansprüche

1. System (10) zur Halterung eines Kabelstrangs (1) für ein Kraftfahrzeug, wobei das System aufweist:
eine Kabelführung (12), die, vorzugsweise klemmend, an dem Kabelstrang (1) befestigbar ist;
eine Anschlusseinrichtung (14), vorzugsweise eine Fahrerhaustrennstelle für ein Kraftfahrzeug, wobei die Anschlusseinrichtung (14) eine Anschlussstelle (15) zum elektrischen Anschließen des Kabelstrangs (1) aufweist; und
wobei die Kabelführung (12) ein erstes Befestigungselement (16a) und die Anschlusseinrichtung (14) ein zweites Befestigungselement (16b) aufweist, und
wobei das erste und zweite Befestigungselement (16a, 16b) ausgebildet sind, miteinander, vorzugsweise rastend, zusammenzuwirken, um die Kabelführung (12) und die Anschlusseinrichtung (14), vorzugsweise lösbar, aneinander zu befestigen, derart, dass ein Abstand (A) zwischen der Anschlussstelle (15) und der Kabelführung (12), vorzugsweise zum Ausgleich von Fertigungstoleranzen des Kabelstrangs (1), einstellbar ist.

2. System (10) nach Anspruch 1, wobei:
das erste und zweite Befestigungselement (16a, 16b) als zueinander korrespondierende Rastelemente ausgebildet sind, mittels derer die Kabelführung (12) und die Anschlusseinrichtung (14) und unter Ausbildung einer, vorzugsweise lösbaren, Rastverbindung aneinander befestigbar sind.

3. System (10) nach Anspruch 1 oder 2, wobei:
das erste und zweite Befestigungselement (16a, 16b) entlang einer Fügerichtung (F) miteinander verbindbar sind; und
der Abstand (A) zwischen der Anschlussstelle (15) und der Kabelführung (12) quer, vorzugsweise senkrecht, zur Fügerichtung (F) einstellbar ist.

4. System (10) nach einem der vorherigen Ansprüche, wobei:
das erste und zweite Befestigungselement (16a, 16b) miteinander in mehreren, vorzugsweise kontinuierlich einstellbaren, Einstellpositionen (E₁, E₂, E₃) verbindbar sind, wobei sich für jede der mehreren Einstellpositionen (E₁, E₂, E₃) der Abstand (A) zwischen der Anschlussstelle (15) und der Kabelführung (12) unterscheidet.

5. System (10) nach einem der vorherigen Ansprüche, wobei:
das erste und zweite Befestigungselement (16a, 16b) in einem miteinanderverbunden Zustand relativ zueinander, vorzugsweise entlang einer Geraden, bewegbar sind, um den Abstand (A) zwischen der Anschlussstelle (15) und der Kabelführung (12) einzustellen; und/oder
das erste oder zweite Befestigungselement (16a, 16b) einen, vorzugsweise geraden, Führungsabschnitt aufweist, entlang derer das zweite oder erste Befestigungselement (16b, 16a) geführt bewegbar ist, um den Abstand (A) zwischen der Anschlussstelle (15) und der Kabelführung (12) einzustellen.

6. System (10) nach einem der vorherigen Ansprüche, wobei das erste Befestigungselement (16a):
integral-einstückig mit der Kabelführung (12) verbunden ist; und/oder
von der Kabelführung (12), vorzugsweise zungenartig, absteht; und/oder
federnd ausgebildet ist; und/oder
einen Rastvorsprung aufweist.

7. System (10) nach einem der vorherigen Ansprüche, wobei das zweite Befestigungselement (16b):
mehrere, vorzugsweise kammförmig angeordnete und/oder voneinander beabstandete, Zapfen (17) aufweist, wobei vorzugsweise die mehreren Zapfen (17):
jeweils, vorzugsweise an einer jeweiligen Stirnseite der Zapfen (17), eine Anlagefläche (17a) für das erste Befestigungselement (16a) aufweisen; und/oder
von dem ersten Befestigungselement (16a) hintergreifbar sind; und/oder
parallel zueinander und/oder gleichmäßig voneinander beabstandet angeordnet sind; und/oder
angeordnet und/oder ausgebildet sind, dass in einem Zustand, in dem die Kabelführung (12) und die Anschlusseinrichtung (14) aneinander zu befestigt sind, nur ein Teil der mehreren Zapfen (17) mit dem ersten Befestigungselement (16a) in Kontakt steht.

8. System (10) nach einem der vorherigen Ansprüche, wobei:
die Anschlusseinrichtung (14) eine Trennwand (14a) aufweist, die ein Inneres der Anschlusseinrichtung (14) in zwei Bereiche unterteilt, wobei die Trennwand (14a) eine, die zwei Bereiche miteinander verbindende, Durchgangsöffnung (14b) aufweist, in der die Anschlussstelle (15) zumindest abschnittsweise angeordnet und/oder ausgebildet ist; und/oder
die Anschlussstelle (15) der Anschlusseinrichtung (14) eine Steckverbinderaufnahme aufweist, in die ein am Kabelstrang (1) befestigter Steckverbinder (2) einsteckbar ist, wobei vorzugsweise
die Anschlussstelle (15) ferner zum Anschließen eines zum Steckverbinder (2) korrespondierenden Gegensteckverbinders ausgebildet ist, derart, dass der Steckverbinder (2) und der Gegensteckverbinder im Bereich der Anschlussstelle (15) elektrisch und mechanisch miteinander verbindbar sind.

9. System (10) nach einem der vorherigen Ansprüche, wobei:
die Anschlusseinrichtung (14) einen Gehäuseabschnitt (14c) zur zumindest abschnittsweisen Aufnahme eines Endes (1 a) des Kabelstrangs (1) aufweist, wobei vorzugsweise:
das zweite Befestigungselement (16b) an dem Gehäuseabschnitt (14c), vorzugsweise an einem wannenförmigen und/oder röhrenförmigen Fortsatz (14d) des Gehäuseabschnitts (14c), angeordnet ist; und/oder
das zweite Befestigungselement (16b) in einer, vorzugsweise beidseitig mit einem Außenraum in Verbindung stehenden, Gehäuseabschnittsdurchgangsöffnung (13) des Gehäuseabschnitts (14c) angeordnet ist; und/oder
der Gehäuseabschnitt (14c) als Berührschutz für die Anschlussstelle (15) dient; und/oder
der Gehäuseabschnitt (14c) mindestens ein Gehäuseabschnittsdurchgangsloch (18) zur Aufnahme eines Befestigungsmittels zum Befestigen der Anschlusseinrichtung (12) am Kraftfahrzeug aufweist; und/oder
der Gehäuseabschnitt (14c) einen abnehmbaren Deckel umfasst.

10. System (10) nach einem der vorherigen Ansprüche, ferner aufweisend:
eine Dichteinrichtung (19), aufweisend eine, an der Kabelführung (12) angeordnete, vorzugsweise geschlossene, Ringwulst (19a) und einen, an der eine Anschlusseinrichtung (14) angeordneten elastischen Dichtabschnitt (19b), wobei in einem Zustand, in dem die Kabelführung (12) und die Anschlusseinrichtung (14) aneinander befestigt sind, die Ringwulst (19a) in den Dichtabschnitt (19b) drückt.

11. System (10) nach einem der vorherigen Ansprüche, wobei die Kabelführung (12):
eine Kabelschelle, vorzugsweise eine Kabelklemmschelle, ist; und/oder
ein erstes Kabelführungsteil und ein zweites Kabelführungsteil aufweist, zwischen denen der Kabelstrang (1) einklemmbar ist, um so die Kabelführung (12) am Kabelstrang (1) zu befestigen, wobei vorzugsweise:
die Kabelführung (12) zumindest eine Kabelführungs-Rastverbindung aufweist, mittels derer das erste und zweite Kabelführungsteil miteinander verbindbar sind.

12. System (10) nach einem der vorherigen Ansprüche, wobei die Kabelführung (12):
ein Kabelführungsdurchgangsloch (12a) aufweist, in das der Kabelstrang (1) aufnehmbar ist, sodass die Kabelführung (12) den Kabelstrang (1) umfangsseitig umgibt; und/oder
zur Aufnahme von zumindest zwei Kabelsträngen (1) ausgebildet ist und zumindest zwei parallele, vorzugsweise durch mindestens einen Trennsteg (12b) zumindest abschnittsweise voneinander getrennte, Führungskanäle (12.1, 12.2) aufweist, in welchen jeweils einer der zumindest zwei Kabelstränge (1) aufnehmbar ist.

13. Kraftfahrzeug, vorzugsweise Nutzfahrzeug, aufweisend ein System (10) nach einem der vorherigen Ansprüche.

14. Kraftfahrzeug nach Anspruch 13, wobei:
das Kraftfahrzeug ein Fahrerhaus aufweist; und
die Anschlusseinrichtung (14) als Fahrerhaustrennstelle ausgebildet ist, welche an dem Fahrerhauses, vorzugsweise in einem Frontbereich des Fahrerhauses, angeordnet ist, wobei vorzugsweise:
das Kraftfahrzeug einen Kabelstrang (1) aufweist, an dem die Kabelführung (12) befestigt ist, wobei ein Ende (1a) des Kabelstrangs (1) in der Fahrerhaustrennstelle aufgenommen ist und dort mit einer innerhalb des Fahrerhauses angeordneten elektrischen Komponente elektrisch verbunden ist und wobei ein weiteres Ende des Kabelstrangs (1) mit zumindest einer außerhalb des Fahrerhauses angeordneten weiteren elektrischen Komponente verbunden ist.

15. Verfahren zur Halterung eines Kabelstrangs (1) mittels eines Systems (10) nach einem der Ansprüche 1 bis 12 oder mittels eines Kraftfahrzeugs nach Anspruch 13 oder 14, wobei das Verfahren aufweist:
Befestigen der Kabelführung (12) an dem Kabelstrang (1);
Festlegen eines Abstands (A) zwischen der Anschlussstelle (15) und der Kabelführung (12); und
Aneinanderbefestigen der Kabelführung (12) und der Anschlusseinrichtung (14) in dem festgelegten Abstand (A) durch Verbinden des ersten und zweiten Befestigungselements (16a, 16b).
